# EUROPEAN PATENT APPLICATION

(11) **EP 3 848 811 A1**
(43) Date of publication of application: **14.07.2021**
(21) Application number: 18932930.3
(22) Date of filing: 07.09.2018
(51) Int. Cl.: G06F 12/00

(54) **DATABASE DEVICE, PROGRAM, AND DATA PROCESSING METHOD**

(71) Applicant: KABUSHIKI KAISHA TOSHIBA, Minato-ku Tokyo 105-0023 (JP); Toshiba Digital Solutions Corporation, Kawasaki-shi, Kanagawa 212-0013 (JP)
(72) Inventor: HATTORI, Masakazu, Kawasaki-shi, Kanagawa 212-0013 (JP)
(74) Representative: Moreland, David
(86) International application number: PCT/JP2018/033322
(87) International publication number: WO 2020/049746

(57) **Abstract**

A database device includes a database, a setting unit, a first registration unit, and a deletion unit. The database includes mutually non-overlapping storage areas, and stores one or more records including expiration dates and data, in at least one of the storage areas. The setting unit sets timing based on the record status, as a threshold deadline for determination that the record stored in the database expires. The first registration unit identifies, as an archive target, a storage area having a registered latest expiration date representing equal to or earlier than the set threshold deadline, from among the storage areas. Then, the first registration unit registers all the records included in the identified storage area, in the archive file. The deletion unit deletes all the records in the storage area registered in the archive file, from the storage area.

## Description

### TECHNICAL FIELD

Arrangements of the present invention relate to a database device, a program, and a data processing method.

### BACKGROUND ART

There is known a system for managing a database in which a large amount of data is sequentially registered. For example, a digital archive function is known as a function of appropriately suppressing the capacity of a database and managing data for a long period of time.

For example, a technology is disclosed in which two databases are prepared, one database is searched for expired data and the expired data is registered in the other database, and the one database is searched for the expired data and the expired data is deleted. Furthermore, a technique is disclosed for which information in a database is periodically acquired as a snapshot, and the information acquired as the snapshot is compressed and encrypted in units of block, and stored in another database. Furthermore, a technique is disclosed for which search and update for expired data is invalidated for data within the valid time period in a database, and new data is inserted into the position of the expired data or the expired data is deleted. However, in related art, the processing load at the time of database management is large.

### CITATION LIST

### PATENT LITERATURE

Patent Literature 1: Japanese Patent Application Laid-open No. H9-223048
Patent Literature 2: JP Patent Publication No. 5844554
Patent Literature 3: Japanese Patent Application Laid-open No. 2005-149348

### SUMMARY OF INVENTION

### PROBLEM TO BE SOLVED BY THE INVENTION

An object of the present invention is to provide a database device, a program, and a data processing method that enable reducing a load in database management.

### SOLUTION TO PROBLEM

A database device according to an arrangement includes a database, a setting unit, a first registration unit, and a deletion unit. The database includes a plurality of mutually non-overlapping storage areas, and stores one or more records including an expiration date and data, in at least one of the storage areas. The setting unit sets timing on the basis of the status of a record, as a threshold deadline for determination that the record stored in the database expires. The first registration unit identifies, as an archive target, a storage area having a registered latest expiration date representing equal to or earlier than the set threshold deadline, from among the storage areas; and registers all the records in the identified storage area, in the archive file. The deletion unit deletes all the records in the storage area registered in the archive file, from the storage area.

### BRIEF DESCRIPTION OF THE DRAWINGS

FIG. 1 is a schematic diagram illustrating a database system.
FIG. 2 is a schematic diagram illustrating a database.
FIG. 3A is a schematic diagram illustrating a data configuration of an archive file.
FIG. 3B is a schematic diagram illustrating a database.
FIG. 4 is a schematic diagram illustrating a database.
FIG. 5A is a schematic diagram illustrating a data configuration of an archive file.
FIG. 5B is a schematic diagram illustrating a database.
FIG. 6 is a sequence diagram illustrating a procedure of data processing.
FIG. 7 is a sequence diagram illustrating a procedure of conventional data processing.
FIG. 8 is a schematic diagram illustrating a hardware configuration.

### DESCRIPTION OF ARRANGEMENTS

A database device, a program, and a data processing method will be described in detail below with reference to the accompanying drawings.

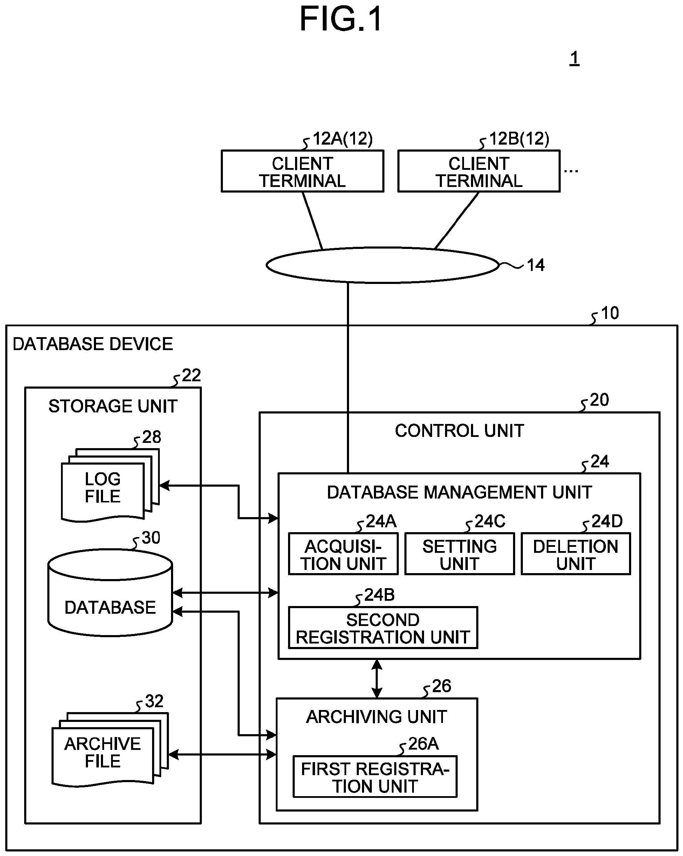

FIG. 1 is a schematic diagram illustrating an example of a database system 1 according to the present arrangement.

The database system 1 includes a database device 10 and a client terminal 12. The database device 10 and the client terminal 12 are communicably connected to each other via a network 14 in a wired or wireless manner.

The database system 1 includes one or more client terminals 12. FIG. 1 illustrates two client terminals 12 (a client terminal 12A and a client terminal 12B) as an example. However, the database system 1 preferably includes one or more client terminals 12, and the number of the client terminals 12 is not limited to two.

Each of the client terminals 12 is an Internet of things (IoT) device that is connected to the network 14 to transmit various data to another device via the network 14. For example, the client terminal 12 includes, but is not limited to, a television, a digital camera, a DVD player, a water heater, various sensors, a lighting device, a fire alarm, a telephone, a surveillance camera, or the like.

In the present arrangement, the client terminal 12 sequentially transmits various time-series data, such as measurement results, to the database device 10. Furthermore, the client terminal 12 transmits an access request to the database device 10. The access request is a signal indicating access to data stored in the database device 10, and is a signal requesting for such as referring to, reading, or retrieving data.

The database device 10 is a device that receives various data from the client terminal 12 and manages the received data by using a database 30. In the present arrangement, the database device 10 sequentially receiving data from the client terminal 12 and managing the received data will be described as an example. Furthermore, the database device 10 performs processing in response to the access request received from the client terminal 12.

The database device 10 includes a control unit 20 and a storage unit 22. The control unit 20 and the storage unit 22 are connected to each other so as to enable data and signals to be transmitted and received.

The storage unit 22 stores various data. In the present arrangement, the storage unit 22 stores a log file 28, the database 30, and an archive file 32. The log file 28 is a file that records processing performed by the control unit 20. For example, the log file 28 stores a reception history of access requests transmitted from the client terminal 12, a reception history of data transmitted from the client terminal 12, and histories of various processing performed by the control unit 20. Details of the database 30 and archive file 32 will be described later.

The control unit 20 controls the database device 10. The control unit 20 includes a database management unit 24 and an archiving unit 26. The database management unit 24 includes an acquisition unit 24A, a second registration unit 24B, a setting unit 24C, and a deletion unit 24D. The archiving unit 26 includes a first registration unit 26A.

The database management unit 24, the acquisition unit 24A, the second registration unit 24B, the setting unit 24C, the deletion unit 24D, the archiving unit 26, and the first registration unit 26A are achieved by, for example, one or more processors.

For example, the database management unit 24, the acquisition unit 24A, the second registration unit 24B, the setting unit 24C, the deletion unit 24D, the archiving unit 26, and the first registration unit 26A may be achieved by causing a central processing unit (CPU) to execute programs, that is, by software. Each of these units may be achieved by a processor, such as a dedicated integrated circuit (IC), that is, hardware. Each of the above units may be achieved by the combined use of software and hardware. In a case of using a plurality of processors, each processor may achieve one of the units or two or more of the units.

The database management unit 24 manages the database 30. The management of the database 30 represents access to the database 30 in accordance with an access request received from the client terminal 12 or update, deletion, retrieval, and the like of a record registered in the database 30, which is described later.

The database management unit 24 includes an acquisition unit 24A, a second registration unit 24B, a setting unit 24C, and a deletion unit 24D.

The acquisition unit 24A acquires a record. The record includes an expiration date and data. The data is data received from the client terminal 12. The expiration date is information indicating an expiration date of data. The expiration date is represented by, for example, a time stamp.

For example, every time data is received from the client terminal 12, the acquisition unit 24A assigns an expiration date to the received data. With assignment of expiration date, the acquisition unit 24A acquires a record including the expiration date and data.

The acquisition unit 24A preferably assigns an expiration date to received data according to a predetermined condition. For example, the acquisition unit 24A assigns timing after a given period of time (e.g., one week, one year, ten years, etc.) from the data reception timing, as the expiration date of the data. Note that the acquisition unit 24A may set a period of time in advance, according to a client terminal 12 that is a data transmission source and assign timing obtained by adding the period of time according to the client terminal 12 that is the data transmission source to the data reception timing, as the expiration date.

Note that the acquisition unit 24A may receive data assigned with an expiration date from the client terminal 12. In this case, the acquisition unit 24A preferably uses, as the record, the data with the expiration date received from the client terminal 12.

The second registration unit 24B registers a record acquired by the acquisition unit 24A, in the database 30.

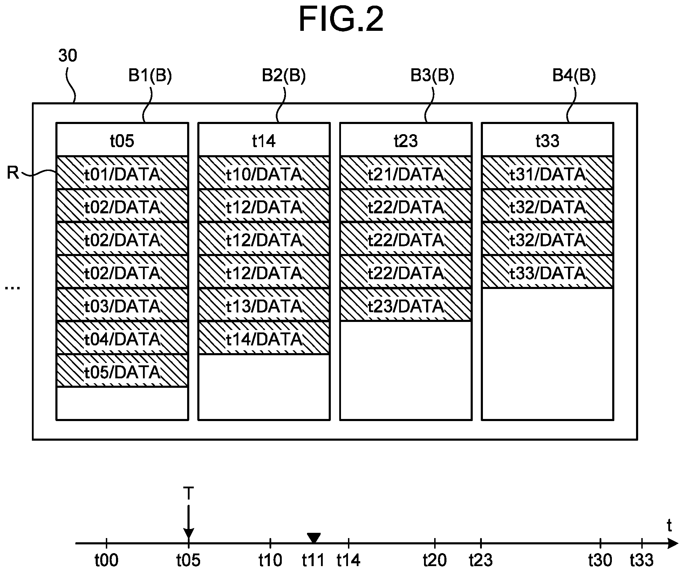

FIG. 2 is a schematic diagram illustrating an example of a data configuration of the database 30 according to the present arrangement.

In the present arrangement, the database 30 includes a plurality of storage areas that do not overlap with each other. Each of the storage areas is, for example, a block area that can store a set of a plurality of records R. In other words, the storage areas represent areas obtained by dividing the database 30 in advance for units of management of the records R by the database management unit 24. In the following, the storage areas are described as blocks B, in some cases. Note that the blocks B may also be referred to as data blocks. Each of the records R includes an expiration date and data, as described above.

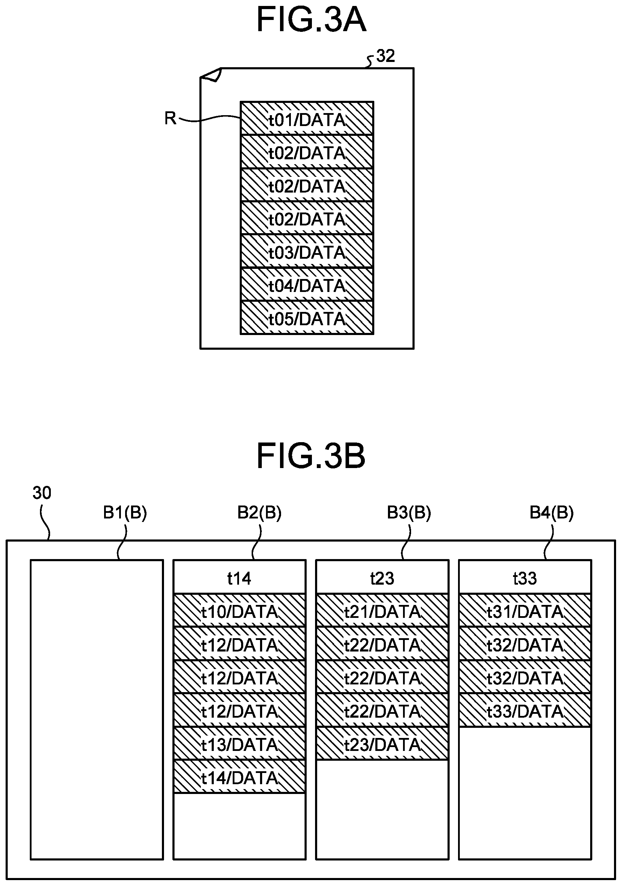

In FIG. 2 and in FIGS. 3A to 5B which are described later, t indicates timing. In FIG. 2, t (t01 to t33) included in each record R indicates an expiration date. Note that the larger a numerical value following t is, the later (more future side) the timing is. In other words, a larger numerical value following t represents more downstream timing (more future) in a chronological direction from past to future. Likewise, in the other figures, the larger a value following t is, the more downstream the timing is in the chronological direction from past to future. Furthermore, in FIG. 2 and in FIGS. 3A to 5B which are described later, "DATA" included in each record R represents data received from the client terminal 12.

FIG. 2 illustrates the database 30 including four blocks B (blocks B1 to B4) as an example. However, the number of blocks B included in the database 30 is preferably two or more and is not limited to four.

Furthermore, a plurality of the blocks B in the database 30 preferably have areas not overlapping with each other in the database 30, and the size thereof is not limited. In other words, the size of each of the blocks B preferably has a predetermined size. Furthermore, the plurality of blocks B may have the same size or different sizes. In the present arrangement, the plurality of blocks B having the same size (fixed-length block) will be described as an example.

Every time the acquisition unit 24A acquires a record R, the second registration unit 24B registers the acquired record in any of the plurality of the blocks B. Therefore, the database 30 stores one or more records R each of which includes an expiration date and data, in at least one of the plurality of the blocks B.

The second registration unit 24B preferably registers a record R acquired by the acquisition unit 24A, in any of the plurality of the blocks B included in the database 30.

For example, every time the acquisition unit 24A acquires a record R, the second registration unit 24B preferably randomly selects a target block B (blocks B1 to B4) for registering the acquired record R and registers the record R in the selected block B.

Furthermore, for example, when acquiring a record R from the acquisition unit 24A, the second registration unit 24B registers the record R in a specific block B until the free space of the block B has a proportion equal to or less than a given proportion. The second registration unit 24B may register the record R in another block B when the free space of the block B has the proportion equal to or less than the given proportion.

Furthermore, the second registration unit 24B may register records R in a block B so that a plurality of records R having close expiration dates are registered in the same block B.

In this case, the second registration unit 24B preferably registers a record R acquired by the acquisition unit 24A, among the plurality of blocks B of the database 30, in a block B where another record R including the closest expiration date to the expiration date included in the acquired record R is recorded.

FIG. 2 illustrates, as an example, a mode in which the second registration unit 24B registers a record R acquired by the acquisition unit 24A, in a block B where another record R including the closest expiration date to an expiration date included in the record R is already stored.

In this case, as illustrated in FIG. 2, a group of records R including expiration dates that are within a given range is registered in each block B.

Note that the acquisition unit 24A may acquire records R by assigning expiration dates in descending order of reception, to data received from the client terminal 12. Then, the second registration unit 24B may register records R acquired by the acquisition unit 24A in the blocks B in order of acquisition of the records R. Then, the second registration unit 24B may repeat processing of sequentially registering records R in the next empty block B, when the free space of one block B has a proportion equal to or less than the given proportion.

Returning to FIG. 1, the description will be continued. The setting unit 24C sets timing based on the status of a record R, as a threshold deadline for determination that the record R stored in the database 30 has expired.

Specifically, in the present arrangement, the setting unit 24C the setting unit 24C sets timing earlier than the present time, as the threshold deadline for determination that the record R stored in the database 30 has expired. In other words, in the present arrangement, the setting unit 24C sets the threshold deadline so as to determine the expiration on the basis of not current timing but timing before the present time.

For example, the setting unit 24C sets the threshold deadline when the free space of at least one of the plurality of blocks B included in the database 30 has a proportion equal to or less than the given proportion. In other words, the setting unit 24C sets the time at which the free space of at least one of the plurality of blocks B included in the database 30 has a proportion equal to or less than the given proportion, as the threshold deadline. Therefore, the threshold deadline is earlier than the current time.

The given proportion indicating the free space is preferably determined in advance according to the configuration of the database 30, the capacity of a block B included in the database 30, the size of data contained in a target record R for registration, or the like. Examples of the given proportion indicating the free space include 50%, 40%, 30%, 20%, 10%, and the like. For example, it is assumed that the given proportion indicating the free space is set to 20%. In this case, the setting unit 24C sets the threshold deadline with timing when at least the free space of one of the plurality of blocks B has a proportion equal to or less than 20%, as the "present time."

When receiving a threshold deadline inquiry signal from the archiving unit 26, the setting unit 24C may set the threshold deadline with the reception timing as the "present time." Furthermore, the setting unit 24C may set the threshold deadline, when receiving the threshold deadline inquiry signal from the archiving unit 26 which is described later and the free space of at least one of the plurality of blocks B included in the database 30 has a proportion equal to or less than the given proportion.

The setting unit 24C may set the time, for example, the date/time that is traced back from the present time by a time period, such as one hour, ten hours, one day, or ten days, as the threshold deadline. Note that the time period is not limited to these. For example, the setting unit 24C sets the timing that is ten days earlier than the present time, as the threshold deadline.

In the present arrangement, the setting unit 24C sets the threshold deadline according to an expiration date included in a record R stored in each block B.

Specifically, the setting unit 24C identifies the latest expiration date in expiration dates included in a plurality of registered records R, for each of the plurality of blocks B included in the database 30. Then, the setting unit 24C sets the identified expiration date that is earlier than the present time and closest to the present time, as the threshold deadline.

A specific description will be given with reference to FIG. 2. For example, it is assumed that the records R including expiration dates of "t01", "t02", "t03", "t04", and "t05" are registered in the block B1. The latest expiration date of a plurality of the records R registered in this block B1 is "t05."

Furthermore, it is assumed that the records R including the expiration dates of "t10", "t12", "t13", and "t14" are registered in the block B2. The latest expiration date of a plurality of the records R registered in this block B2 is "t14."

Furthermore, it is assumed that the records R including the expiration dates of "t21", "t22", and "t23" are registered in the block B3. The latest expiration date of a plurality of the records R registered in this block B3 is "t23."

Furthermore, it is assumed that the records R including the expiration dates of "t31", "t32", and "t33" are registered in the block B4. The latest expiration date of a plurality of the records R registered in this block B4 is "t33."

At this time, it is assumed that the current timing is, for example, "t11." In this case, the setting unit 24C determines, from among the latest expiration dates "t05", "t14", "t23", and "t33" in the blocks B (blocks B1 to B4) and as a threshold deadline T, the expiration date "t05" that is earlier (past) than the current timing "t11" and the closest to the current timing "t11."

Note that when a new record R is registered in a block B, the second registration unit 24B may identify the latest expiration date from among expiration dates included in the block B to register the identified expiration date in the header of the block B. In this case, as illustrated in FIG. 2, the latest expiration date of the expiration dates of records R included in each block B is registered in the header of each block B.

In this case, the setting unit 24C reads the expiration date registered in the header of each block B to facilitate identification of the latest expiration date registered in each block B.

Returning to FIG. 1, the description will be continued. The setting unit 24C outputs the set threshold deadline T to the archiving unit 26.

The archiving unit 26 is a functional unit that performs an archiving process. In the present arrangement, the archiving unit 26 registers at least one of the records R registered in the database 30, in the archive file 32. In other words, the archiving unit 26 registers a record R registered in the database 30, in the archive file 32 that is not to be managed by the database management unit 24. Note that the database management unit 24 controls access to a block (i.e., records R) having an expiration date equal to or earlier than the threshold deadline T, and thus, the archiving unit 26 is allowed to read a record R registered in the database 30 but is not allowed to write to or update the database 30 or delete the record R registered in the database 30.

The archiving unit 26 includes the first registration unit 26A. The first registration unit 26A identifies a block B, as an archive target, from among a plurality of blocks B of the database 30, the block B having the latest expiration date in the expiration dates included in the records R registered, the latest expiration date being equal to or earlier than the threshold deadline T set by the setting unit 24C. The expiration date equal to or earlier than the threshold deadline T represents an expiration date that is the same as the threshold deadline T and an expiration date that is earlier than the threshold deadline T.

Then, the first registration unit 26A reads all the records R in the identified block B from the database 30 and registers the read records R in the archive file 32.

A specific description will be given with reference to FIG. 2. For example, it is assumed that the setting unit 24C sets the timing "t05" as the threshold deadline T.

In this case, the archiving unit 26 identifies, as the archive target, the block B1 having the latest expiration date that is earlier than the threshold deadline T ("t05"), from among the plurality of blocks B included in the database 30.

Then, the archiving unit 26 reads (copies) all the records R registered in the block B1 and registers the read records R in the archive file 32. Therefore, as illustrated in FIG. 3A, all the records R registered in the block B1 of the database 30 are registered in the archive file 32.

Returning to FIG. 1, the description will be continued. When the records R are registered in the archive file 32 by the first registration unit 26A, the deletion unit 24D of the database management unit 24 deletes all the records R in the block B for which the records R have been registered in the archive file 32, from the block B of the database 30.

For example, as illustrated in FIGS. 2 and 3A, it is assumed that the first registration unit 26A has registered all the records R in the block B1, in the archive file 32. In this case, the deletion unit 24D deletes all the records R in the block B1 in the database 30 from the database 30.

Therefore, the database 30 has the data configuration, for example, as illustrated in FIG. 3B. FIG. 3B is a schematic diagram illustrating an example of the data configuration of the database 30 after the deletion unit 24D deletes all the records R in the block B1.

Note that, FIG. 2 illustrates, as an example, a mode in which the second registration unit 24B registers a record R acquired by the acquisition unit 24A in the block B where another record R including the closest expiration date to an expiration date included in the record R is already registered.

However, as described above, every time the acquisition unit 24A acquires a record R, the second registration unit 24B may randomly select one of the plurality of blocks B (blocks B1 to B4) and register the record R in the selected block B.

In this case, records R to which the same expiration date is set or a plurality of records R to which expiration dates within a given range is set are registered in the plurality of blocks B in a distributed manner, in some cases.

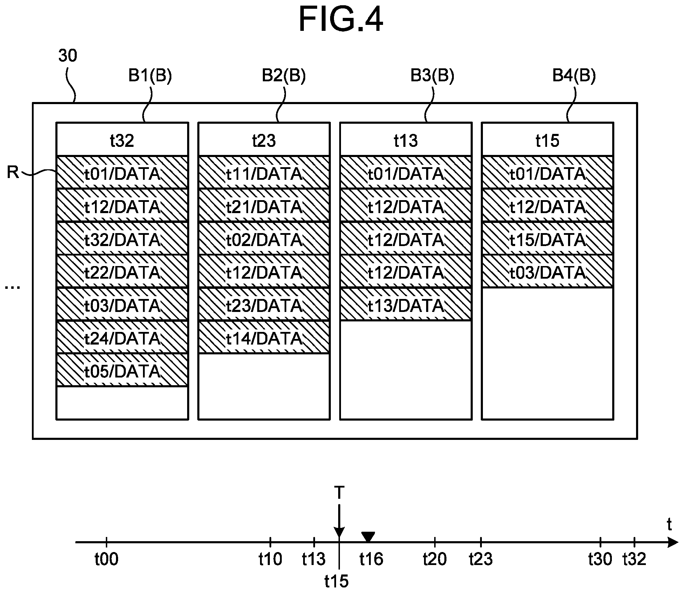

FIG. 4 is a schematic diagram illustrating an example of a data configuration of the database 30, when the second registration unit 24B randomly registers records R acquired by the acquisition unit 24A, in the plurality of blocks B.

As illustrated in FIG. 4, for example, it is assumed that the records R including the expiration dates of "t01", "t12", "t32", "t22", "t03", "t24", and "t05" are registered in the block B1. The latest expiration date of a plurality of the records R registered in this block B1 is "t32."

Furthermore, it is assumed that the records R including the expiration dates of "t11", "t21", "t02", "t12", "t23", and "t14" are registered in the block B2. The latest expiration date of a plurality of the records R registered in this block B2 is "t23."

Furthermore, it is assumed that the records R including the expiration dates of "t01", "t12", and "t13" are registered in the block B3. The latest expiration date of a plurality of the records R registered in this block B3 is "t13."

Furthermore, it is assumed that the records R including the expiration dates of "t01", "t12", "t15", and "t03" are registered in the block B4. The latest expiration date of a plurality of the records R registered in this block B4 is "t15."

At this time, it is assumed that the current timing is, for example, "t16." In this case, the setting unit 24C determines the expiration date "t15" from among the latest expiration dates "t32", "t23", "t13", and "t15" registered in the blocks B (blocks B1 to B4), as the threshold deadline T, the expiration date "t15" being earlier than the current timing "t16" and closest to the current timing "t16."

Note that as described above, when a new record R is registered in a block B, the second registration unit 24B may identify the latest (farthest future) expiration date from among expiration dates included in a plurality of the records R included in the block B to register the identified expiration date in the header of the block B. In this configuration, as illustrated in FIG. 4, the latest expiration date of the expiration dates of records R included in each block B is registered in the header of each block B.

Then, the setting unit 24C outputs the set threshold deadline T ("t15") to the archiving unit 26. In this case, the first registration unit 26A of the archiving unit 26 identifies, as the archive target, the blocks B3 and B4 having the latest expiration dates that are earlier than the threshold deadline T ("t15"), from among the plurality of blocks B included in the database 30.

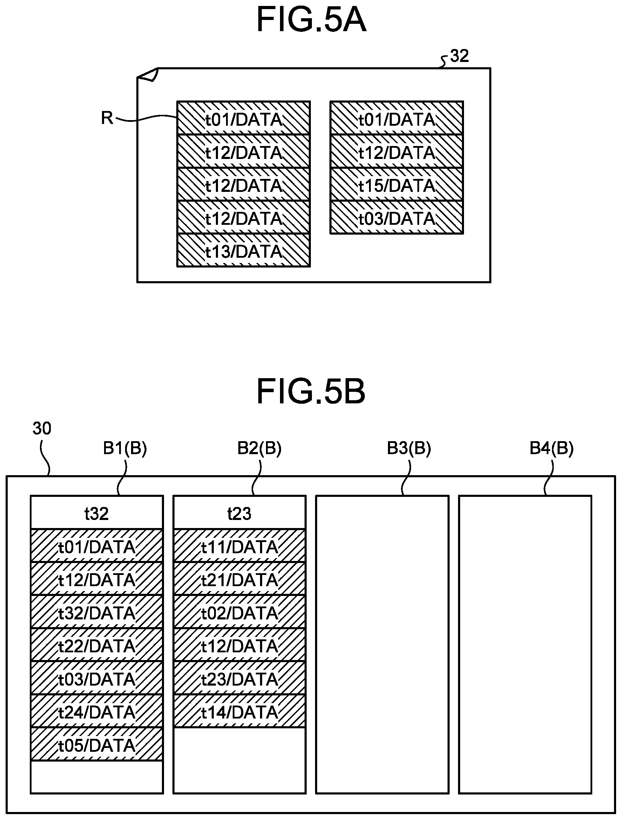

Then, the archiving unit 26 reads (copies) all the records R registered in the blocks B3 and B4 and registers the read records R in the archive file 32. Therefore, as illustrated in FIG. 5A, all the records R registered in the blocks B3 and B4 of the database 30 are registered in the archive file 32.

Then, the deletion unit 24D of the database management unit 24 deletes all the records R in the blocks B3 and B4 in the database 30, from the blocks B3 and B4 of the database 30. Therefore, the database 30 after the records R is deleted by the deletion unit 24D has a state as illustrated in FIG. 5B. FIG. 5B is a schematic diagram illustrating an example of the database 30 after the deletion unit 24D deletes the records R.

Next, an example of a data processing procedure performed by the database device 10 will be described.

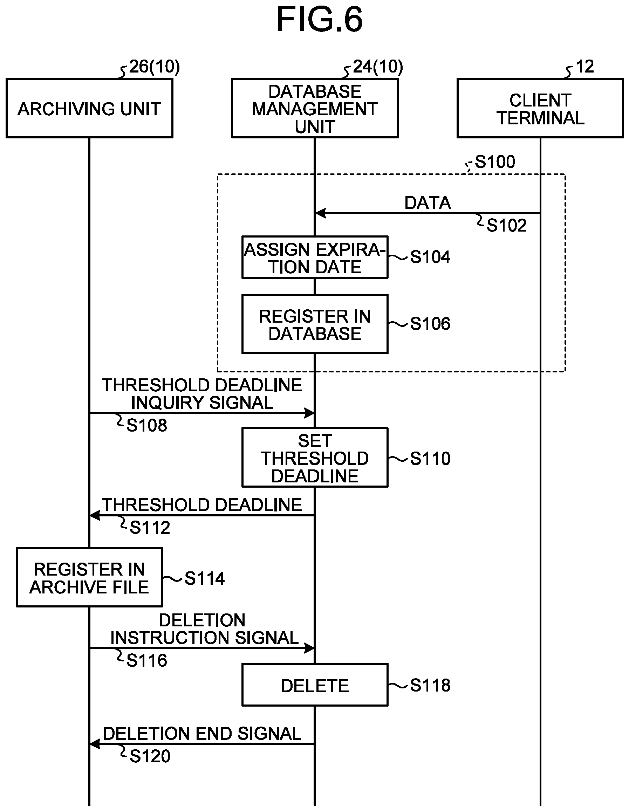

FIG. 6 is a sequence diagram illustrating an example of the data processing procedure performed by the database device 10 according to the present arrangement.

### -Registration of record R in database 30-

First, the database management unit 24 of the database device 10 performs a registration process of registering a record R including data received from a client terminal 12, in the database 30 (Steps S100 to S106).

Specifically, the client terminal 12 transmits the data to the database device 10 (Step S102). The acquisition unit 24A of the database management unit 24 assigns an expiration date to the data received from the client terminal 12 (Step S104). Through the processing of Step S104, the acquisition unit 24A acquires a record including the expiration date and the data.

The second registration unit 24B registers the record acquired by the acquisition unit 24A, in a block B of the database 30 (Step S106).

The database device 10 performs the processing of Steps S102 to S106 each time data is transmitted from the client terminal 12 (Step S100). Therefore, records R including data received from the client terminal 12 and expiration dates are sequentially registered in blocks B of the database 30.

### -Setting of threshold deadline T-

Next, the archiving unit 26 of the database device 10 performs a threshold deadline setting process (Steps S108 to S112).

Specifically, the archiving unit 26 of the database device 10 transmits a threshold deadline inquiry signal to the database management unit 24 (Step S108). The threshold deadline inquiry signal is a signal indicating an inquiry about the threshold deadline T. The archiving unit 26 transmits the threshold deadline inquiry signal to the database management unit 24. For example, the archiving unit 26 transmits the threshold deadline inquiry signal to the database management unit 24 at the start of an archiving process. Note that the archiving process starts at any timing and is not limited to specific timing.

The setting unit 24C of the database management unit 24 sets the threshold deadline T, when the threshold deadline inquiry signal is received and the free space of at least one of a plurality of the blocks B included in the database 30 has a proportion equal to or less than a given proportion (Step S110). As described above, for example, the setting unit 24C sets the threshold deadline T earlier than the present time, with the timing at which the free space of at least one of the plurality of the blocks B included in the database 30 has a proportion equal to or less than the given proportion, as the "present time."

At this time, the setting unit 24C sets an expiration date that is earlier than the present time and the closest to the present time from among the latest expiration dates in the plurality of blocks B included in the database 30, as the threshold deadline T.

Then, the setting unit 24C transmits the set threshold deadline T to the archiving unit 26 (Step S112).

### -Archiving process-

Next, the archiving unit 26 of the database device 10 performs the archiving process (Step S114).

Specifically, the first registration unit 26A of the archiving unit 26 receives the threshold deadline T received from the setting unit 24C of the database management unit 24. Then, the first registration unit 26A of the archiving unit 26 identifies, as the archive target, a block B having the registered latest expiration date that is equal to or earlier than the threshold deadline T, from among the plurality of the blocks B in the database 30. Then, the first registration unit 26A of the archiving unit 26 reads all the records R in the block B identified as the archive target from the database 30 and registers the read records R in the archive file 32 (Step S114).

### -Deletion of archived records R-

Next, the deletion unit 24D of the database device 10 deletes the archived records R from the database 30 (Steps S116 to S120).

Specifically, when the registration in the archive file 32 is completed, the first registration unit 26A of the archiving unit 26 transmits a deletion instruction signal to the database management unit 24 (Step S116) .

The deletion unit 24D of the database management unit 24 having received the deletion instruction signal deletes all the records R in the block B having the registered latest expiration date that is equal to or earlier than the threshold deadline T, from among the plurality of the blocks B in the database 30 (Step S118). In other words, the deletion unit 24D deletes records R in units of block B. Then, the deletion unit 24D of the database management unit 24 transmits a deletion end signal to the archiving unit 26 (Step S120), and finishes this sequence.

As described above, the database device 10 according to the present arrangement includes the database 30, the setting unit 24C, the first registration unit 26A, and the deletion unit 24D.

The database 30 is a database that includes the plurality of storage areas (blocks B) that do not overlap with each other and stores one or more records R each including an expiration date and data, in at least one of the plurality of storage areas (blocks B). The setting unit 24C sets timing based on the status of a record R, as the threshold deadline T for determination that the record R stored in the database 30 has expired. The first registration unit 26A identifies, as the archive target, a storage area (block B) having the registered latest expiration date that is equal to or earlier than the set threshold deadline T, from among the plurality of storage areas (blocks B). Then, the first registration unit 26A registers all the records R in the identified storage area (block B), in the archive file 32. The deletion unit 24D deletes all the records R in the storage area (block B) registered in the archive file 32, from the storage area (block B) .

As described above, in the database device 10 according to the present arrangement, the database 30 stores records R in a plurality of blocks B (storage areas). Then, in the database device 10 according to the present arrangement, records R are archived in the archive file 32 by the first registration unit 26A and the records R are deleted by the deletion unit 24D, in units of block B (storage area).

Therefore, the archiving process from the database 30 to the archive file 32 and a database management process, such as registration and deletion of records R for the database 30 can be performed independently and in parallel.

Thus, in the database device 10 according to the present arrangement, a load in management of the database 30 can be reduced.

Furthermore, in the database device 10 according to the present arrangement, the setting unit 24C of the database management unit 24 sets timing based on the status of a record R as the threshold deadline T. Then, the first registration unit 26A of the archiving unit 26 registers all records R in a block B having the registered latest expiration date that is equal to or earlier than the threshold deadline T, from among a plurality of the blocks B in the database 30, in the archive file 32. The deletion unit 24D of the database management unit 24 deletes all records R in the block B having the registered latest expiration date that is equal to or earlier than the threshold deadline T.

In other words, in the database device 10 according to the present arrangement, management in the database 30 is performed for each of a plurality of blocks B. Then, in the database device 10, all records R in a block B having the registered latest expiration date that is equal to or earlier than the threshold deadline T are registered in the archive file 32. Then, after the registration in the archive file 32, the deletion unit 24D deletes all the records R in the block B.

Therefore, the deletion unit 24D of the database management unit 24 can delete the records R archived in the archive file 32 in the database 30, in units of block B. In other words, the deletion unit 24D only needs to empty the block B itself without deleting each record R sequentially one by one, and thus, the archived records R can be easily deleted at a very high speed and with a low processing load.

Therefore, in the database device 10 according to the present arrangement, the load in management of the database 30 can be reduced.

Furthermore, the database device 10 according to the present arrangement sets, as the threshold deadline T for determining expiration, timing based on the status of a record R.

Therefore, even if the database management unit 24 receives an access request for access to the database 30 from a client terminal 12 while the first registration unit 26A is registering records R in the archive file 32, inconsistency in data between the database 30 and the archive file 32 can be prevented.

Therefore, in addition to the above effects, the database device 10 according to the present arrangement can ensure the consistency between the database 30 and the archive file 32.

On the other hand, management in a conventional database 30 is not performed for each storage area, and the current timing is set as the threshold deadline T for determining expiration date. Therefore, conventional database management has a large load.

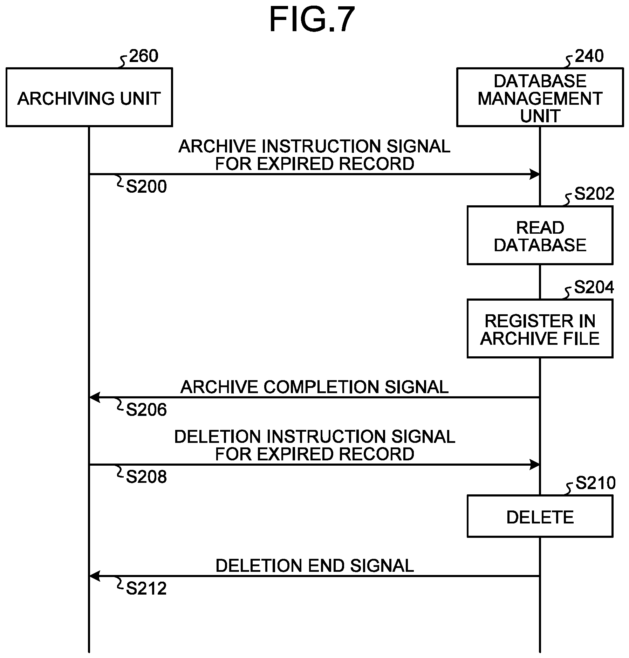

FIG. 7 is a sequence diagram illustrating an example of a conventional data processing.

For example, an archiving unit 260 of a conventional database device transmits an archive instruction signal for expired record to a database management unit 240 (Step S200). The database management unit 240 reads an expired record in a database that has an expiration date equal to or earlier than the present time, from the database (Step S202). Then, the database management unit 240 registers the record read in Step S202, in the archive file 32 (Step S204). Then, the database management unit 240 transmits an archive completion signal to an archiving unit 260 (Step S206).

The archiving unit 260 transmits a deletion instruction signal for expired record to the database management unit 240. Upon receiving the signal, the database management unit 240 searches the database for the expired record having an expiration date equal to or earlier than the present time and deletes the expired record from the database (Step S210). Then, the database management unit 240 transmits a deletion end signal to the archiving unit 260 (Step S212).

As described above, in related art, management in the database is not performed for each storage area, and the database management unit 240 are not configured to perform the archiving process for the archive file and the database management process for the database, such as registration, deletion, and the like of records, in parallel. Therefore, conventional database management has a large processing load. Furthermore, in related art, it is necessary for the database management unit 240 side to search the entire area in the database, every time of registering a record in the archive file or deletion of the record. Still furthermore, in related art, the archiving process for the database is performed on the database management unit 240 side. Still another furthermore, the threshold deadline for determining the expiration is equal to the current timing. It is thus difficult to ensure the consistency between the database and the archive file.

On the other hand, in the database device 10 according to the present arrangement, the setting unit 24C of the database management unit 24 sets timing based on the status of a record R as the threshold deadline T. Then, the first registration unit 26A of the archiving unit 26 registers all records R in a block B having the registered latest expiration date that is equal to or earlier than the threshold deadline T, from among a plurality of the blocks B in the database 30, in the archive file 32. The deletion unit 24D of the database management unit 24 deletes all records R in the block B having the registered latest expiration date that is equal to or earlier than the threshold deadline T.

Therefore, in the database device 10 according to the present arrangement, the load in management of the database 30 can be reduced.

Next, a hardware configuration of the database device 10 according to the above arrangements will be described.

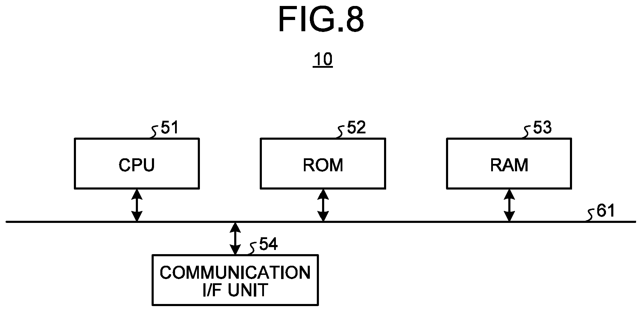

FIG. 8 is a schematic diagram illustrating an example of the hardware configuration of the database device 10 according to the present arrangement.

The database device 10 according to the above arrangements includes a control device such as a central processing unit (CPU) 51, a storage device such as a read only memory (ROM) 52, a random access memory (RAM) 53, and a hardware drive (HDD), a communication I/F unit 54 that is an interface with various devices, and a bus 61 that connects the respective units to each other, and the database device 10 has a hardware configuration using a general computer.

In the database device 10 according to the above arrangements, the CPU 51 reads a program from the ROM 52 and executes the program on the RAM 53 to achieve each of the above functions on the computer.

Note that programs for executing the above processes performed by the database device 10 according to the above arrangements may be stored in the HDD. Furthermore, the programs for executing the above processes performed by the database device 10 according to the above arrangements may be provided by being incorporated in advance in the ROM 52.

Furthermore, the programs for executing the above processes performed by the database device 10 according to the above arrangements may have an installable or executable file format, be stored in a computer-readable recording medium such as CD-ROM, CD-R, memory card, digital versatile disk (DVD), or a flexible disk (FD), and be provided as a computer program product. Still furthermore, the programs for executing the above processes performed by the database device 10 according to the above arrangements may be stored on a computer connected to a network such as the Internet and provided by being downloaded via the network. Still another furthermore, the programs for executing the above processes performed by the database device 10 according to the above arrangements may be provided or distributed via the network such as the Internet.

It should be noted that the arrangements of the present invention have been described above, but the arrangements are presented by way of examples, and are not intended to limit the scope of the invention. The novel arrangements can be carried out in various other modes, and various omissions, replacements, and modifications thereof can be made without departing from the scope of the invention. The arrangements and examples, and modifications thereof are included in the spirit and scope of the invention and further included in the invention cited in the claims as well as the equivalents thereof.

## Claims

1. A database device comprising:
a database that includes a plurality of storage areas not overlapping with each other and stores one or more records each including an expiration date and data, in at least one of the plurality of storage areas;
a setting unit that sets timing based on a status of each of the records, as a threshold deadline for determination that a record stored in the database has expired;
a first registration unit that identifies, as an archive target, a storage area having a registered latest expiration date representing equal to or earlier than the set threshold deadline, from among the plurality of storage areas, and registers all records included in the identified storage area, in an archive file; and
a deletion unit that deletes all the records in the storage area registered in the archive file, from the storage area.

2. The database device according to claim 1, further comprising:
an acquisition unit that acquires a record; and
a second registration unit that registers the acquired record in the storage area of the database.

3. The database device according to claim 2, wherein
the second registration unit
registers the acquired record, among the plurality of storage areas, in a storage area where another record including a closest expiration date to an expiration date included in the acquired record is recorded.

4. The database device according to any one of claims 1 to 3, wherein
the setting unit
identifies, for each of the plurality of storage areas, a latest expiration date from among registered expiration dates and sets the identified expiration date that is earlier than a present time and closest to the present time, as the threshold deadline.

5. The database device according to any one of claims 1 to 4, wherein
the setting unit
sets the threshold deadline when a free space of at least one of the plurality of storage areas has a proportion equal to or less than a given proportion.

6. The database device according to any one of claims 1 to 5, wherein
the storage area is a block area with a predetermined size in the database.

7. A program causing a computer to execute:
a step of setting timing based on a status of a record, as a threshold deadline for determination that the record stored in a database has expired, the database including a plurality of storage areas not overlapping with each other and storing one or more records each including an expiration date and data, in at least one of the plurality of storage areas;
a step of identifying, as an archive target, a storage area having a registered latest expiration date representing equal to or earlier than the set threshold deadline, from among the plurality of storage areas, and registering all records included in the identified storage area, in an archive file; and
a step of deleting all the records in the storage area registered in the archive file, from the storage area.

8. A data processing method comprising:
a step of setting timing based on a status of a record, as a threshold deadline for determination that the record stored in a database has expired, the database including a plurality of storage areas not overlapping with each other and storing one or more records each including an expiration date and data, in at least one of the plurality of storage areas;
a step of identifying, as an archive target, a storage area having a registered latest expiration date representing equal to or earlier than the set threshold deadline, from among the plurality of storage areas, and registering all records included in the identified storage area, in an archive file; and
a step of deleting all the records in the storage area registered in the archive file, from the storage area.
